# EUROPÄISCHE PATENTSCHRIFT

(11) **EP 2 208 020 B1**
(45) Veröffentlichungstag und Bekanntmachung des Hinweises auf die Patenterteilung: **21.08.2013**
(21) Anmeldenummer: 08805011.7
(22) Anmeldetag: 02.10.2008
(51) Int. Cl.: G01C 19/574

(54) **DREHRATENSENSOR**
YAW RATE SENSOR
CAPTEUR DE VITESSE DE ROTATION

(30) Priorität: 15.11.2007 DE 102007054505
(43) Veröffentlichungstag der Anmeldung: 21.07.2010
(73) Patentinhaber: Robert Bosch GmbH, 70442 Stuttgart (DE)
(72) Erfinder: NEUL, Reinhard, 70567 Stuttgart (DE); CLASSEN, Johannes, 72764 Reutlingen (DE); OHMS, Torsten, 71665 Vaihingen/Enz-Aurich (DE); KUHLMANN, Burkhard, 72762 Reutlingen (DE); FRANKE, Axel, 71254 Ditzingen (DE); KOHN, Oliver, 72768 Reutlingen (DE); MEISEL, Daniel Christoph, 71665 Vaihingen An Der Enz (DE); HAUER, Joerg, 72762 Reutlingen (DE); GOMEZ, Udo-Martin, 71229 Leonberg (DE); KEHR, Kersten, 08267 Zwota (DE)
(74) Vertreter: Holzhüter, Matthias
(86) Internationale Anmeldenummer: PCT/EP2008/063228
(87) Internationale Veröffentlichungsnummer: WO 2009/062786

(56) Entgegenhaltungen:
- WO-A-02/066929
- WO-A-2006/034706
- WO-A-2006/070059
- WO-A-2008/051677
- DE-C1- 19 641 284
- US-A1- 2004 211 257

## Beschreibung

### Stand der Technik

Die vorliegende Erfindung betrifft einen Drehratensensor gemäß dem Oberbegriff des Patentanspruchs 1. Es sind linearschwingende Drehratensensoren allgemein bekannt. Bei diesen Drehratensensoren werden Teile der Sensorstruktur aktiv in eine Schwingung (Primärschwingung) in eine Richtung, d. h. entlang einer ersten Achse (x-Achse), versetzt, die parallel zu einer Substratoberfläche orientiert ist. Bei Auftreten einer äußeren Drehrate um eine ausgezeichnete sensitive Achse wirken Coriolis-Kräfte auf die schwingenden Teile der Sensorstruktur. Diese periodisch mit der Frequenz der Primärschwingung veränderlichen Corioliskräfte bewirken Schwingungen von Teilen der Sensorstruktur (Sekundärschwingung) in Richtung einer zweiten Achse, die senkrecht zur x-Achse orientiert ist. Die zweite Achse kann parallel zur Substratoberfläche oder senkrecht zur Substratoberfläche orientiert sein. An der Sensorstruktur sind Detektionsmittel angebracht, welche die Sekundärschwingung über Elektroden kapazitiv detektieren.

Eine zunehmende Zahl von Anwendungen verlangt nach Drehratensensoren, die Drehraten um mehrere aufeinander senkrecht stehende Achsen detektieren können. Hierfür werden bislang mehrere einachsige Sensoren lateral oder hochkant nebeneinander platziert. Die Verwendung mehrerer einachsiger Drehratsensoren bringt Nachteile hinsichtlich Kosten, Platzbedarf, Strombedarf und relativer Orientierungsgenauigkeit der Achsen mit sich.

Weiterhin sind im Stand der Technik zweiachsige Drehratensensoren bekannt, die Drehraten um zwei zueinander senkrecht stehende, parallel zur Substratoberfläche orientierte, Achsen detektieren können. Entsprechende zweiachsige Drehratensensoren sind beispielsweise in DE 19641284 und WO2006/034706 offenbart.

### Offenbarung der Erfindung

Aufgabe der vorliegenden Erfindung ist es, einen verbesserten zweiachsigen Drehratensensor bereitzustellen, der Drehraten um zwei zueinander senkrecht stehende Raumachsen detektieren kann. Weiter ist es Aufgabe der vorliegenden Erfindung, einen dreiachsigen Drehratensensor bereitzustellen, der Drehraten um alle drei Raumachsen detektieren kann.

Die der Erfindung zugrunde liegende Aufgabe wird durch einen Drehratensensor mit den Merkmalen des Patentanspruchs 1 gelöst. Erfindungsgemäß weist der Drehratensensor eine Mehrzahl von beweglichen Teilstrukturen auf, die über einer Oberfläche des Substrats angeordnet sind. Die Teilstrukturen sind über ein gemeinsames, insbesondere ein zentrales, Federelement gekoppelt und können zu einer gekoppelten Schwingung in einer zur Oberfläche des Substrats parallelen Ebene angeregt werden. Jede der Teilstrukturen weist ein oder mehrere Coriolis-Elemente auf, die zum Nachweis von durch eine Coriolis-Kraft verursachten Auslenkungen vorgesehen sind.

Vorteilhafterweise verfügt der Drehratensensor durch die mechanische Kopplung der Teilstrukturen über eine definierte gemeinsame Antriebmode und benötigt daher nur einen Antriebsregelkreis. Dadurch reduziert sich der Platz- und Strombedarf der elektronischen Auswertschaltung.

In einer bevorzugten Ausführungsform werden zwei Teilstrukturen des Drehratensensors zu einer Antriebsmode angeregt, die eine anti-parallele, gegenphasige Auslenkung der beiden beweglichen Teilstrukturen entlang einer gemeinsamen Achse bewirkt.

Vorteilhafterweise verbleibt der Massenschwerpunkt eines derartigen Drehratensensors während einer Periode der Primärschwingung ortsfest. Der Drehratensensor koppelt weder einen Linearimpuls noch ein Drehmoment aus, wodurch der Energieaustausch mit der Umgebung minimiert wird.

In einer weiteren bevorzugten Ausführungsform weist der Drehratensensor vier bewegliche Teilstrukturen auf, die über ein zentrales Federelement miteinander gekoppelt sind und sich zu einer gekoppelten Schwingungsmode in einer zur Oberfläche des Substrats parallelen Ebene anregen lassen. Dabei führen die erste und die zweite bewegliche Teilstruktur eine anti-parallele Schwingung in Richtung einer ersten Achse auf, während die dritte und die vierte bewegliche Teilstruktur eine anti-parallele Schwingung in Richtung einer zweiten Achse ausführen, die senkrecht zur ersten Achse orientiert ist. Vorteilhafterweise lässt sich die gekoppelte Schwingungsmode des aus vier Teilstrukturen bestehenden Drehratensensors ebenfalls durch einen gemeinsamen Antriebsregelkreis anregen, wodurch der Platz- und Strombedarf der elektronischen Auswertschaltung reduziert wird.

Weiter weist auch der aus vier Teilstrukturen bestehende Drehratensensor den Vorteil eines über die Dauer einer Schwingungsperiode ortsfesten Massenschwerpunkts auf. Dadurch koppelt der Drehratensensor weder einen Linearimpuls noch ein Drehmoment aus.

Ein weiterer Vorteil des aus vier Teilstrukturen bestehenden Drehratensensors ist die Möglichkeit, Coriolis-Elemente zur Detektion von Drehraten um alle drei Raumachsen zu integrieren. Da die auf ein Coriolis-Element wirkende Coriolis-Kraft senkrecht zur Antriebsrichtung des Coriolis-Elements und senkrecht zur Drehachse einer Drehrate wirkt, bewirkt eine Drehrate um eine zur Antriebsrichtung des Coriolis-Elements parallele Drehachse keine Coriolis-Kraft. Da die Primärschwingung des erfindungsgemäßen aus vier beweglichen Teilstrukturen bestehenden Drehratensensors Bewegungskomponenten in mehr als nur eine Raumrichtung aufweist, ist eine Detektion von Drehraten um jede beliebige Raumachse möglich.

In einer Weiterbildung der bevorzugten Ausführungsform weisen mindestens zwei gegenphasig schwingende Teilstrukturen identische Coriolis-Elemente zur Detektion einer Drehrate um die selbe Achse auf. Vorteilhafterweise bewirkt die gegenphasige Primärschwingung der die identischen Coriolis-Elemente tragenden Teilstrukturen eine gegenphasige Sekundärschwingung der Coriolis-Elemente. Dies ermöglicht eine volldifferenzielle Auswertung des Detektionssignals. Zudem reduziert die anti-parallele Antriebs- und Detektionsbewegung die Störanfälligkeit des Drehratensensors bezüglich auftretender Linearbeschleunigungen.

In einer weiteren bevorzugten Ausführungsform sind die Coriolis-Elemente eines Drehratensensors nicht nur bezüglich einer Antriebsbewegung, sondern auch in einer Detektionsmode gekoppelt. Vorteilhafterweise wird dadurch eine ungewollte Aufspaltung der Detektionsfrequenzen der unterschiedlichen Coriolis-Elemente des Drehratensensors verhindert.

Vorteilhafterweise lassen sich die von der Erfindung bereitgestellten zwei- und dreiachsigen Drehratensensoren kostengünstig und massenfertigungstauglich durch Standardprozesse der Oberflächenmikromechanik herstellen.

Die Erfindung wird nun anhand der beigefügten Figuren näher erläutert. Dabei werden für gleiche Teile einheitliche Bezugszeichen verwendet.

Kurze Beschreibung der Zeichnungen
- Figur 1: zeigt einen zweiachsigen Drehratensensor zur Detektion von Drehraten um die y- und z-Achse;
- Figur 2: zeigt einen zweiachsigen Drehratensensor zur Detektion von Drehraten um die y- und z-Achse;
- Figur 3: zeigt eine bekannte mikromechanische Biegefeder;
- Figur 4: zeigt eine als Leiterfeder ausgebildete Biegefeder;
- Figur 5: zeigt einen zweiachsigen Drehratensensor zur Detektion von Drehraten um die y- und z-Achse;
- Figur 6: zeigt einen zweiachsigen Drehratensensor zur Detektion von Drehraten um die x- und y-Achse;
- Figur 7: zeigt eine schematische Darstellung einer Antriebsmode eines aus vier Teilstrukturen bestehenden Drehratensensors;
- Figur 8: zeigt eine schematische Darstellung einer Antriebsmode eines aus vier Teilstrukturen bestehenden Drehratensensors;
- Figur 9: zeigt eine schematisch Darstellung eines zweiachsigen Drehratensensors zur Detektion von Drehraten um die x- und y-Achse;
- Figur 10: zeigt eine schematische Darstellung eines dreiachsigen Drehratensensors zur Detektion von Drehraten um alle drei Raumachsen;
- Figur 11: zeigt eine schematische Darstellung eines dreiachsigen Drehratensensors zur Detektion von Drehraten um alle drei Raumachsen.
- Figur 12: zeigt eine schematische Darstellung eines dreiachsigen Drehratensensors mit reduziertem Platzbedarf;
- Figur 13: zeigt eine schematische Darstellung eines dreiachsigen Drehratensensors;
- Figur 14: zeigt eine schematische Darstellung eines dreiachsigen Drehratensensors;
- Figur 15: zeigt eine schematische Darstellung eines dreiachsigen Drehratensensors;
- Figur 16: zeigt eine schematische Darstellung eines dreiachsigen Drehratensensors;
- Figur 17: zeigt eine schematische Darstellung eines aus sechs Teilstrukturen bestehenden dreiachsigen Drehratensensors.

### Ausführungsformen der Erfindung

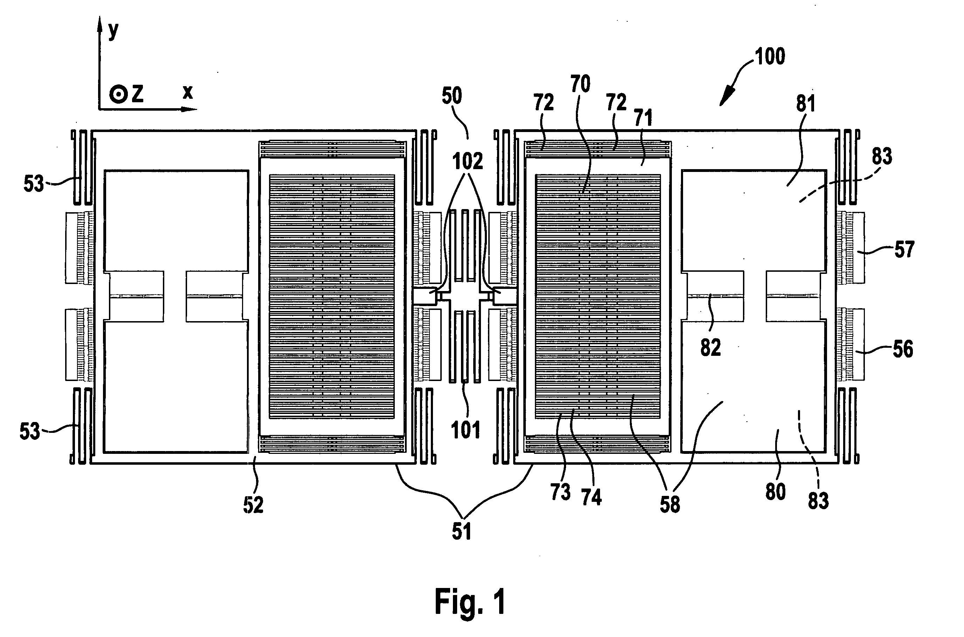

Figur 1 zeigt eine Ansicht eines zweiachsigen Drehratensensors 100. Der Drehratensensor 100 umfasst zwei bewegliche Teilstrukturen 51, die über einem Substrat 50, welches in der Papierebene verläuft, angeordnet sind. Die Kantenlänge des Drehratensensors 100 beträgt einige hundert Mikrometer.

Die Herstellung der beweglichen Teilstrukturen 51 geht von einem Material aus, das zuunterst ein dickes Siliziumsubstrat aufweist, auf dem sich eine Oxidschicht befindet. Oberhalb der Oxidschicht liegt eine Polysiliziumschicht VP, die eine Leiterbahnebene bildet. Darauf folgt eine weitere Oxidschicht OX, auf der eine Siliziumschicht EP abgeschieden wird, aus der die beweglichen Komponenten der Drehratensensoren gefertigt werden. In der Oxidschicht OX sind an speziellen Stellen Aussparungen vorgesehen. Während des Abscheidens der Siliziumschicht EP entstehen in diesen Aussparungen Verbindungen zwischen der Siliziumschicht EP und der Leiterbahnebene VP. Daraufhin werden die Sensorelemente definiert und die Oxidschicht OX in einem Ätzprozess entfernt. Es ergeben sich freitragende Strukturen.

Jede der beweglichen Teilstrukturen 51 weist einen Antriebsrahmen 52 auf. Die Antriebsrahmen 52 können Perforationslöcher aufweisen, auf deren Darstellung in Figur 1 zugunsten größerer Übersichtlichkeit verzichtet wurde. Jeder Antriebsrahmen 52 ist über vier Verbindungs-Biegefedern 53 mit dem Substrat 50 verbunden. Die Verbindungs-Biegefedern 53 sind als mäanderförmig gefaltete Balkenfeder ausgebildet und so orientiert, dass die bewegliche Teilstruktur 51 in der in der Papierebene verlaufenden x-Richtung beweglich, in alle anderen Raumrichtungen hingegen fixiert ist. Die Verbindungs-Biegefedern 53 können auch eine andere Geometrie aufweisen, durch die eine richtungsabhängige Federsteifigkeit gewährleistet ist.

Der Antriebsrahmen 52 jeder beweglichen Teilstruktur 51 kann über zwei Antriebs-Kammstrukturen 56 in x-Richtung in Schwingungen versetzt werden. Jede Antriebs-Kammstruktur 56 besteht aus einem mit dem Substrat 50 verbundenen Teil und einem mit dem Antriebsrahmen 52 verbundenen Teil. Beide Teile der Antriebs-Kammstruktur 56 weisen Kammstrukturen auf, deren Zinken ineinandergreifen, ohne einander zu berühren. Durch Anlegen gleich- oder gegenpoliger Spannungen an beide Teile einer Antriebs-Kammstruktur 56 kann auf eine bewegliche Teilstruktur 51 eine Kraft in x-Richtung ausgeübt und die bewegliche Teilstruktur 51 in Schwingung versetzt werden. Die Schwingung der beweglichen Teilstruktur 51 kann über zwei weitere am Antriebsrahmen 42 befestigte kapazitive Antriebs-Detektions-Kammstrukturen 57 detektiert werden. Der Aufbau der Antriebs-Detektions-Kammstrukturen 57 entspricht dem der Antriebs-Kammstrukturen 56. Die beiden Antriebs-Detektions-Kammstrukturen 57 sind bevorzugter Weise an gegenüberliegenden Seiten der beweglichen Teilstruktur 51 angebracht, um eine differentielle Detektion der Antriebsschwingung zu ermöglichen.

Jeder Antriebsrahmen 52 weist an der dem jeweils anderen Antriebsrahmen 52 zugewandten Außenkante ein Verbindungsstück 102 auf. Die beiden Verbindungsstücke 102 sind mit einer zentralen Verbindungsfeder 101 verbunden. Die zwei beweglichen Teilstrukturen 51 sind dadurch über die zentrale Verbindungsfeder 101 gekoppelt. Die zentrale Verbindungsfeder 101 besteht aus zwei mäanderförmig gefalteten Balken aus Substratmaterial. Die zentrale Verbindungsfeder 101 kann auch eine andere Geometrie aufweisen.

Jede der beiden beweglichen Teilstrukturen 51 weist zwei Coriolis-Elemente 58 auf. Die Coriolis-Elemente 58 besitzen eine im Wesentlichen rechteckige Form. Ein erstes Coriolis-Element 58 jeder beweglichen Teilstruktur 51 ist ein Gitterstruktur-Coriolis-Element 70. Ein zweites Coriolis-Element 58 jeder beweglichen Teilstruktur 51 ist ein Wippen-Coriolis-Element 80. Die Coriolis-Elemente 58 sind derart auf den beweglichen Teilstrukturen 51 angeordnet, dass der Drehratensensor 100 spiegelsymmetrisch bezüglich einer senkrecht zur Oberfläche des Substrats 50 orientierten, zwischen den beweglichen Teilstrukturen 51 angeordneten Ebene ist.

Das Gitterstruktur-Coriolis-Element 70 weist einen Rahmen 71 auf. An zwei sich in y-Richtung gegenüberliegenden Seiten des Rahmens 71 ist der Rahmen 71 über jeweils zwei Biegefedern 72 mit dem Antriebsrahmen 52 verbunden. Die vier mäanderförmig gefalteten Biegefedern 72 sind durch die Ausrichtung ihrer Faltungen vor allem in y-Richtung dehnbar, während eine Schwingung des Antriebsrahmens 52 in x-Richtung voll auf den Rahmen 71 des Gitterstruktur-Coriolis-Elements 70 übertragen wird. Der vom Rahmen 71 umschlossene Bereich des Gitterstruktur-Coriolis-Elements 70 weist bewegliche Elektroden 73 auf. In den Leerräumen der Gitterstruktur sind mit der darunterliegenden Leiterbahnebene verbundene, feststehende Elektroden 74 angeordnet. Die Elektroden 73, 74 erlauben eine Detektion einer Auslenkung des Gitterstruktur-Coriolis-Elements 70 in y-Richtung.

Das Wippenstruktur-Coriolis-Element 80 weist ein Wippenelement 81 auf. Das Wippenelement 81 besteht aus zwei in y-Richtung nebeneinander angeordneten Elementen unterschiedlicher Masse, die über einen Steg verbunden sind. Der Steg ist über zwei parallel zur x-Achse orientierte Torsionsfedern 82 beidseitig mit dem Antriebsrahmen 52 verbunden. Darüber hinaus besteht keine Verbindung des Wippenelements 81 mit dem Antriebsrahmen 52. Die Torsionsfedern 82 ermöglichen eine Drehung des Wippenelements 81 um eine durch die Torsionsfedern 82 gebildete Achse. Von der Drehung um diese zur x-Achse parallele Achse abgesehen, verfügt das Wippenstruktur-Coriolis-Element 80 idealer Weise über keine weiteren Bewegungsfreiheitsgrade gegenüber dem Antriebsrahmen 52. Eine Schwingung der beweglichen Teilstruktur 51 in x-Richtung wird vollständig auf das Wippenstruktur-Coriolis-Element 80 übertragen. Unterhalb der beiden Teile des Wippenelements 81 ist auf dem Substrat 50 je eine Detektionselektrode 83 vorgesehen. Eine Drehung des Wippenelements 81 bewirkt Änderung der Kapazität zwischen den Detektionselektroden 83 und dem Wippenelement 81 und kann dadurch differentiell nachgewiesens werden.

Die Antriebsfrequenz der Antriebs-Kammstrukturen 56 wird vorzugsweise so gewählt, dass die beiden beweglichen Teilstrukturen 51 zu einer anti-parallelen Schwingung in x-Richtung mit gegenphasiger Auslenkung der beiden beweglichen Teilstrukturen 51 angeregt werden. Da die beiden beweglichen Teilstrukturen 51 symmetrisch zueinander ausgebildet sind und im Wesentlichen gleiche Massen besitzen, bleibt der Massenschwerpunkt des Drehratensensors 100 während einer Periode der anti-parallelen Primärschwingung ortsfest. Dadurch koppelt der Drehratensensor 100 weder einen Linearimpuls noch ein Drehmoment aus, wodurch der Energieaustausch mit der Umgebung minimiert wird.

Bei Auftreten einer Drehrate um die z-Achse wirkt auf die Gitterstruktur-Coriolis-Elemente 70 der ersten und der zweiten beweglichen Teilstruktur 51 eine Coriolis-Kraft in y-Richtung. Diese Coriolis-Kraft bewirkt eine Auslenkung der Gitterstruktur-Coriolis-Elemente 70 in y-Richtung, die mittels der beweglichen Elektroden 73 und der mit dem Substrat 50 verbundenen Elektroden 74 detektiert werden kann. Wegen der gegenphasigen Schwingung der beiden beweglichen Teilstrukturen 51 wirkt die Coriolis-Kraft auf die beiden Gitterstruktur-Coriolis-Elemente 70 in entgegengesetzte Richtungen. Während einer ersten Hälfte einer Schwingungsperiode der beweglichen Teilstrukturen 51 wirkt beispielsweise auf das erste Gitterstruktur-Coriolis-Element 70 eine Coriolis-Kraft in positive y-Richtung, während auf das zweite Gitterstruktur-Coriolis-Element 70 eine Coriolis-Kraft in negative y-Richtung wirkt. Während der nächsten Hälfte der Schwingungsperiode wirkt auf das erste Gitterstruktur-Coriolis-Element 70 eine Coriolis-Kraft in negative y-Richtung, während auf das zweite Gitterstruktur-Coriolis-Element 70 eine Coriolis-Kraft in positive y-Richtung wirkt. Dadurch wird eine differenzielle Auswertung der durch die Elektroden 73, 74 detektierten Auslenkungen der Gitterstruktur-Coriolis-Elemente 70 möglich. Dadurch wird eine Störung der Drehratendetektion durch gegebenenfalls zusätzlich auf den Drehratensensor 100 wirkende Linearbeschleunigungen unterdrückt.

Bei Auftreten einer Drehrate um die z-Achse wirkt auf die erste und die zweite bewegliche Teilstruktur 51 ebenfalls eine Coriolis-Kraft in y-Richtung. Wegen der in y-Richtung steifen Verbindungs-Biegefedern 53 ist eine Auslenkung der beweglichen Teilstrukturen 51 in y-Richtung jedoch ausreichend stark unterdrückt. Auch auf die Wippenstruktur-Coriolis-Elemente 80 wirkt eine Coriolis-Kraft in y-Richtung. Wegen der in y-Richtung steifen Torsionsfedern 82 ist eine Auslenkung der Wippenstruktur-Coriolis-Elemente 80 in y-Richtung aber ebenfalls nicht möglich, beziehungsweise sehr stark unterdrückt. Eine zur Substratoberfläche parallele Auslenkung führt außerdem zu keinen Kapazitätsänderungen an den mit dem Substrat verbundenen Elektroden 83.

Bei Auftreten einer Drehrate um die y-Achse wirkt auf die Wippenstruktur-Coriolis-Elemente 80 der ersten und der zweiten beweglichen Teilstruktur 51 eine Coriolis-Kraft in z-Richtung. Wegen der asymmetrisch auf beide Seiten der Torsionsfedern 82 verteilten Masse des Wippenelements 81 der Wippenstruktur-Coriolis-Elemente 80 bewirkt die in z-Richtung angreifende Coriolis-Kraft eine Drehung der Wippenelemente 81 um die parallel zur x-Achse orientierte Achse der Torsionsfedern 82. Die Drehung der Wippenelemente 81 kann über Kapazitätsänderungen an den Detektionselektroden 83 detektiert werden. Wegen der anti-parallelen Schwingungsbewegung der beiden beweglichen Teilstrukturen 51 wirkt die Coriolis-Kraft auf beide Wippenstruktur-Coriolis-Elemente in entgegengesetzte Richtungen und bewirkt eine Drehung der beiden Wippenstruktur-Coriolis-Elemente 80 in entgegengesetzte Drehrichtungen. Dadurch können die Kapazitätsänderungen der Detektionselektroden 83 differenziell ausgewertet werden und eine Störung der Drehratendetektion durch gegebenenfalls zusätzlich auf den Drehratensensor 100 wirkende Linearbeschleunigungen wird unterdrückt.

Bei Auftreten einer Drehrate um die y-Achse wirkt auf den Antriebsrahmen 52 der ersten und der zweiten beweglichen Teilstruktur 51 ebenfalls eine Coriolis-Kraft in z-Richtung. Wegen der in z-Richtung steifen Verbindungs-Biegefedern 53 ist eine Auslenkung der Antriebsrahmen 52 in z-Richtung jedoch nicht möglich. Auch auf die Gitterstruktur-Coriolis-Elemente 70 wirkt eine Coriolis-Kraft in z-Richtung. Wegen der in z-Richtung steifen Biegefedern 72 ist eine Auslenkung der Gitterstruktur-Coriolis-Elemente 70 in z-Richtung aber ebenfalls nicht möglich.

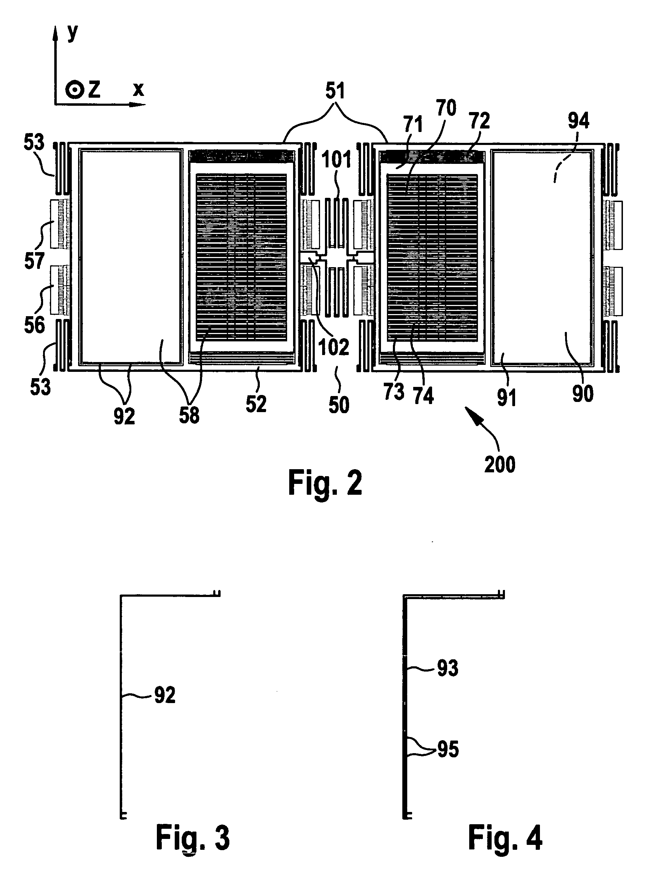

Figur 2 zeigt eine schematische Darstellung eines zweiachsigen Drehratensensors 200. Der Drehratensensor 200 unterscheidet sich vom in Figur 1 dargestellten Drehratensensor 100 dadurch, dass in jeder der beiden beweglichen Teilstrukturen 51 das Wippenstruktur-Coriolis-Element 80 durch ein Trampolinstruktur-Coriolis-Element 90 ersetzt ist.

Jedes der beiden Trampolinstruktur-Coriolis-Elemente 90 weist eine im Wesentlichen rechteckige seismische Masse 91 auf. Die seismische Masse 91 ist über vier Biegefedern 92 mit dem Antriebsrahmen 52 verbunden, ansonsten frei beweglich. Jede Biegefeder 92 greift etwa in der Mitte einer Seitenkante der seismischen Masse 91 an, verläuft parallel zur Seitenkante der seismischen Masse 91 in einem Spalt zwischen der seismischen Masse 91 und dem Antriebsrahmen 52 bis zu etwa der Mitte einer benachbarten Seitenkante der seismischen Masse 91 und ist dort mit dem Antriebsrahmen 52 verbunden. Vorteilhafterweise sind die Biegefedern 92 in x- und y-Richtungen steif, so dass die seismische Masse 91 in x- und y-Richtung nicht gegen den Antriebsrahmen 52 ausgelenkt werden kann. In z-Richtung gestatten die Biegefedern 92 eine gleichförmige, planparallele Auslenkung der seismischen Masse 91 gegen den Antriebsrahmen 52. Unterhalb der seismischen Masse 91 ist auf dem Substrat 50 eine Detektionselektrode 94 vorgesehen. Eine Auslenkung der seismischen Masse 91 bewirkt eine Kapazitätsänderung an der Detektionselektrode 94 und kann dadurch nachgewiesen werden.

Bei Auftreten einer Drehrate um die y-Achse wirkt eine Coriolis-Kraft in z-Richtung auf die beiden Trampolinstruktur-Coriolis-Elemente 90 und bewirkt eine Auslenkung der seismischen Massen 91 in z-Richtung. Wegen der gegenphasigen Bewegung der beiden beweglichen Teilstrukturen 51 wirkt die Coriolis-Kraft auf die beiden Trampolinstruktur-Coriolis- Elemente 90 in entgegengesetzte Richtungen und bewirkt eine entgegengesetzte Auslenkung der beiden seismischen Massen 91. Daher kann die Auslenkung der beiden seismischen Massen 91 durch die Detektionselektroden 94 differenziell erfolgen. Dadurch ist der Drehratensensor 200 unempfindlich gegenüber durch Linearbeschleunigungen in z-Richtung verursachte Störungen.

Figur 3 zeigt eine schematische Darstellung einer bekannten geknickten Biegefeder 92, die zur Aufhängung der seismischen Masse 91 eines Trampolinstruktur-Coriolis-Elements 90 verwendet werden kann. Die Biegefeder 92 besteht aus einem einzelnen langen, schmalen Balken aus Silizium. Der Balken weist in einem mittleren Bereich einen Knick von 90° auf. An beiden Enden des Balkens sind unter einem Winkel von 90° zum Balken Endstücke vorgesehen, über die die Biegefeder 92 mit anderen mikromechanischen Bauteilen, beispielsweise einer seismischen Masse 91 und einem Antriebsrahmen 52 eines Trampolinstruktur-Coriolis-Elements 90, verbunden sein kann.

Figur 4 zeigt eine schematische Darstellung einer Leiterfeder 93, die ebenfalls zur Aufhängung einer seismischen Masse 91 in einem Trampolinstruktur-Coriolis-Element 90 verwendet werden kann. Die Leiterfeder 93 besteht aus zwei parallelen langen, schmalen Balken aus Silizium, die über die Länge der Leiterfeder 93 mehrfach über Sprossen 95 aus Silizium verbunden sind. Der Abstand zweier Sprossen 95 zueinander ist größer als der Abstand der beiden parallelen Balken der Leiterfeder 93. Die Leiterfeder 93 weist in einem mittleren Bereich einen Knick von 90° auf. An beiden Enden der Leiterfeder 93 sind unter einem Winkel von 90° Endstücke vorgesehen, über die die Leiterfeder 93 mit anderen mikromechanischen Bauteilen, beispielsweise einer seismischen Masse 81 und einem Antriebsrahmen 52 eines Trampolinstruktur-Coriolis-Elements 90, verbunden sein kann. Die Leiterfeder 93 bietet gegenüber der Biegefeder 92 aus Figur 3 ein wesentlich höheres Verhältnis der Steifigkeiten in x- und y-Richtung zur Steifigkeit in z-Richtung. Dadurch ist die Leiterfeder 93 besser zur Aufhängung der seismischen Masse 91 eines Trampolinstruktur-Coriolis-Elements geeignet, als die Biegefeder 92. Die Leiterfeder 93 kann auch für beliebige andere mikromechanische Bauteile verwendet werden, für die ein Federelement mit anisotroper Federsteifigkeit benötig wird.

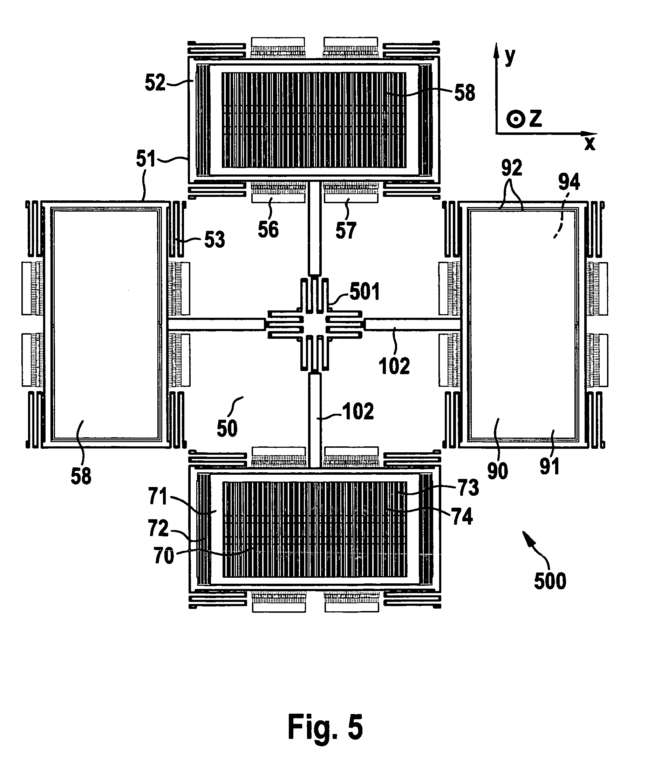

Figur 5 zeigt eine schematische Darstellung eines weiteren zweiachsigen Drehratensensors 500 zur Detektion von Drehraten um die y- und z-Achse. Der Drehratensensor 500 umfasst vier bewegliche Teilstrukturen 51. Die vier beweglichen Teilstrukturen 51 sind über Verbindungsstücke 102 mit einer zentralen Verbindungsfeder 501 verbunden. Die Verbindungsfeder 501 besteht aus einem mäanderförmig gefalteten Balken aus Substratmaterial. Die Verbindungsfeder 501 kann auch anders ausgestaltet sein.

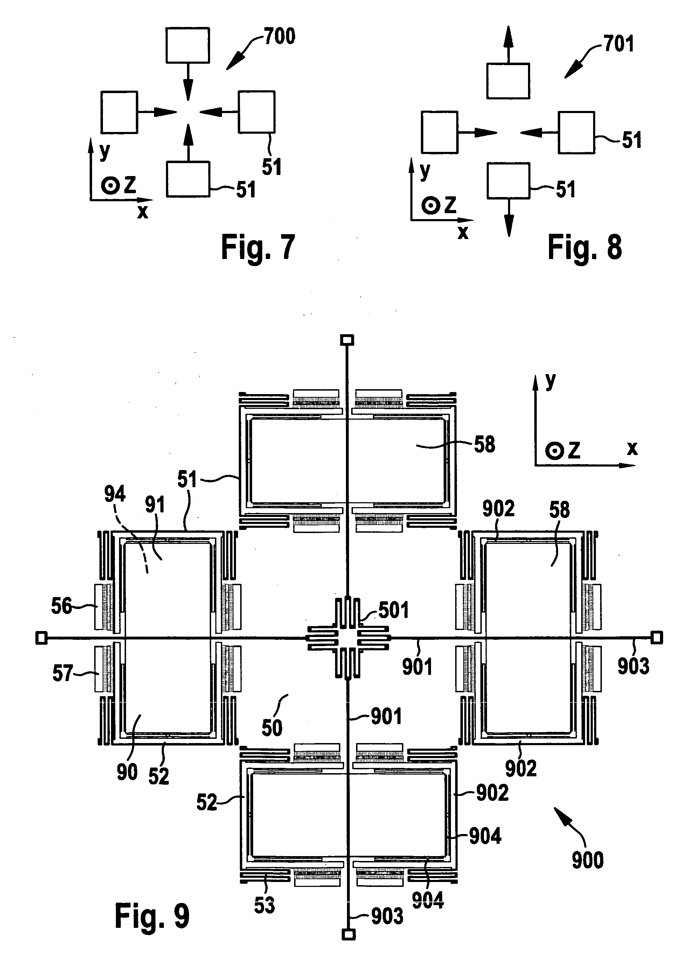

Eine erste und eine zweite bewegliche Teilstruktur 51 sind derart angeordnet, dass sie zu einer gekoppelten Schwingung in x-Richtung angeregt werden können. Eine dritte und eine vierte bewegliche Teilstruktur 51 sind so angeordnet, dass sie zu einer gekoppelten Schwingung in y-Richtung angeregt werden können. Durch die zentrale Verbindungsfeder 501 sind die Schwingung der ersten und der zweiten beweglichen Teilstruktur 51 und die Schwingung der dritten und der vierten beweglichen Teilstruktur 51 miteinander gekoppelt. Die vier beweglichen Teilstrukturen 51 des Drehratensensors 500 können in eine gemeinsame Antriebsmode angeregt werden, die eine überlagerte Auslenkung der vier beweglichen Teilstrukturen 51 in x- und y-Richtung bewirkt. In den Figuren 7 und 8 sind schematisch zwei mögliche Antriebsmoden dargestellt. Die in Figur 7 gezeigte Antriebsmode (breath-mode) 700 bewirkt eine gleichzeitige Bewegung aller vier beweglichen Teilstrukturen 51 zur zentralen Verbindungsfeder 501 hin, oder von der zentralen Verbindungsfeder 501 weg. In der in Figur 8 gezeigten Antriebsmode (anti-breath-mode) 701 bewegen sich in einer ersten Hälfte einer Schwingungsperiode die beiden in x-Richtung beweglichen Teilstrukturen 51 zur zentralen Verbindungsfeder 501 hin, während die beiden in y-Richtung beweglichen Teilstrukturen 51 sich von der zentralen Verbindungsfeder 501 wegbewegen. In einer zweiten Hälfte einer Schwingungsperiode bewegen sich die beiden in x-Richtung beweglichen Teilstrukturen 51 von der zentralen Verbindungsfeder 501 weg, während sich die in y-Richtung beweglichen Teilstrukturen 51 zur zentralen Verbindungsfeder 501 hin bewegen. Die zentrale Verbindungsfeder 501 bewirkt eine Frequenzaufspaltung der beiden in Figur 7 und 8 dargestellten Antriebsmoden 700, 701 des Drehratensensors 500. Durch eine definierte phasenrichtige Krafteinkopplung in x- und y-Richtung mittels der an den beweglichen Teilstrukturen 51 des Drehratensensors 500 vorgesehenen Antriebs-Kamm-Strukturen 56 lässt sich gezielt eine der beiden Antriebsmoden 700, 701 anregen.

Anders als bei den in den Figuren 1 und 2 dargestellten Drehratensensoren 100, 200, weist jede der beweglichen Teilstrukturen 51 des in Figur 5 gezeigten Drehratensensors 500 lediglich ein Coriolis-Element 58 auf. Die in x-Richtung beweglichen ersten und zweiten Teilstrukturen 51 weisen je ein Trampolinstruktur-Coriolis-Element 90 auf. Die in y-Richtung beweglichen dritten und vierten Teilstrukturen 51 weisen je ein Gitterstruktur-Coriolis-Element 70 auf.

Bei Auftreten einer Drehrate um die y-Achse wirkt auf die in x-Richtung beweglichen ersten und zweiten Teilstrukturen 51 eine Coriolis-Kraft in z-Richtung und bewirkt eine Auslenkung der seismischen Massen 91 der Trampolinstruktur-Coriolis-Elemente 90 in Richtung der z-Achse. Die anti-parallele Bewegung der ersten und zweiten beweglichen Teilstrukturen 51 bewirkt eine in entgegengesetzte Richtungen weisende Auslenkung der seismischen Massen 91 und erlaubt eine differentielle Auswertung mittels der Detektionselektroden 94 der Trampolinstruktur-Coriolis-Elemente 90.

Bei Auftreten einer Drehrate um die z-Achse wirkt auf die in y-Richtung beweglichen dritten und vierten Teilstrukturen 51 eine Coriolis-Kraft in x-Richtung und bewirkt eine Auslenkung der Rahmen 71 der Gitterstruktur-Coriolis-Elemente 70 entlang der x-Achse. Wegen der anti-parallelen Bewegung der dritten und vierten beweglichen Teilstrukturen 51 werden die Rahmen 71 beider Gitterstruktur-Coriolis-Elemente 70 in entgegengesetzte Richtungen ausgelenkt, was eine differenzielle Auswertung ermöglicht.

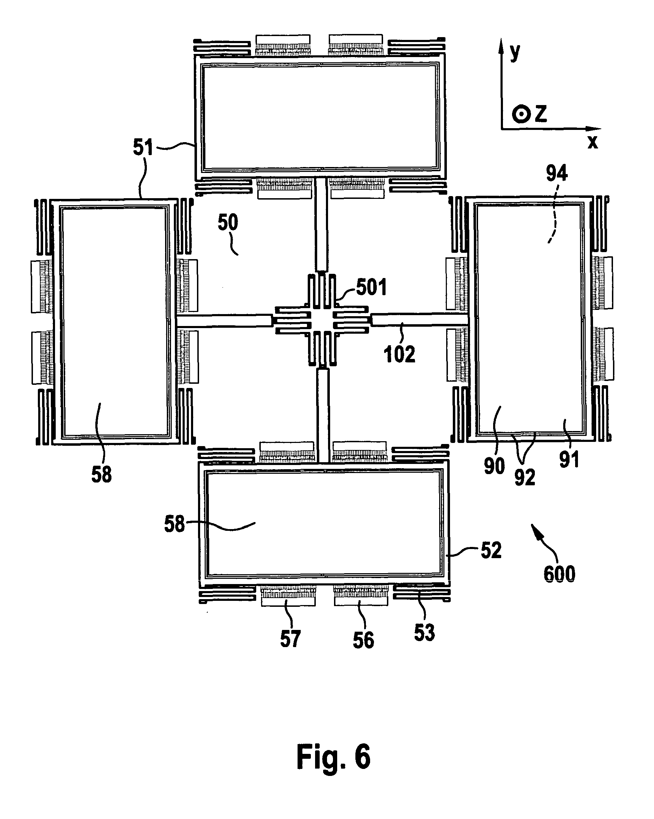

Figur 6 zeigt eine schematische Darstellung eines zweiachsigen Drehratensensors zur Detektion von Drehraten um die x- und y-Achse. Der Drehratensensor 600 unterscheidet sich vom in der Figur 5 dargestellten Drehratensensor 500 dadurch, dass auch die in y-Richtung beweglichen Teilstrukturen 51 Trampolinstruktur-Coriolis-Elemente 90 anstelle der Gitterstruktur-Coriolis-Elemente 70 aufweisen. Bei Auftreten einer Drehrate um die x-Achse wirkt auf die in y-Richtung beweglichen Teilstrukturen 51 eine Coriolis-Kraft in z-Richtung, die eine Auslenkung der seismischen Masse 91 der Trampolinstruktur-Coriolis-Elemente 90 in Richtung der z-Achse bewirkt. Wegen der anti-parallelen Bewegung der in y-Richtung beweglichen Teilstrukturen 51 bewirkt die Coriolis-Kraft eine entgegengesetzte Auslenkung der beiden seismischen Massen 91, die differenziell ausgewertet werden kann.

Figur 9 zeigt eine schematische Darstellung eines zweiachsigen Drehratensensors 900 zur Detektion von Drehraten um die x- und y-Achse. Wie der in Figur 6 dargestellte Drehratensensor 600, weist der Drehratensensor 900 vier bewegliche Teilstrukturen 51 auf, die je ein Trampolinstruktur-Coriolis-Element 90 umfassen. Im Vergleich zu Figur 6 sind die Antriebsrahmen 52 der beweglichen Teilstrukturen 51 jedoch durch zweigeteilte Antriebsrahmen 902 ersetzt. Zwischen den zweigeteilten Antriebsrahmen 902 und der zentralen Verbindungsfeder 501 besteht keine Verbindung. Stattdessen ist die zentrale Verbindungsfeder 501 über Verbindungsstücke 901 mit den seismischen Massen 91 der Trampolinstruktur-Coriolis-Elemente 90 verbunden. Weiter sind die seismischen Massen 91 der Trampolinstruktur-Coriolis-Elemente 90 über zusätzliche Verbindungselemente 903 auf der der zentralen Verbindungsfeder 501 abgewandten Seite einer jeden beweglichen Teilstruktur 51 mit dem Substrat 50 verbunden. Die Kopplung der seismischen Massen 91 über die zentrale Verbindungsfeder 501 bewirkt, dass die Coriolis-Elemente 58 nicht nur bezüglich der Antriebsbewegung, sondern auch in der Detektionsmode gekoppelt sind. Die Biegefedern 904, die die seismischen Massen 91 mit dem Antriebsrahmen 902 verbinden, sind in diesem Ausführungsbeispiel U-förmig ausgebildet.

Prozesstechnisch bedingte Unterschiede der Massen zweier Teilstrukturen 51 oder der Federsteifigkeiten der Biegefedern 92 oder 904 zweier Coriolis-Elemente 58 können zu einer ungewollten Aufspaltung der Detektionsfrequenzen beider Coriolis-Elemente 58 führen, wodurch sich unterschiedliche Phasenbeziehungen zwischen der Antriebsbewegung und der Detektionsbewegung der Coriolis-Elemente 58 ergeben. Dies erschwert eine einfache Auswertung der beiden Detektionskanäle, beispielsweise über einen gemeinsamen Auswertpfad im Multiplexing-Betrieb, da die Signale mit unterschiedlichen Phasen detektiert werden müssen. Auch eine elektronische Quadraturkompensation ist deutlich erschwert. Durch eine Kopplung der Detektionsmoden der Coriolis-Elemente 58 der vier beweglichen Teilstrukturen 51 lässt sich dieses Problem vermeiden.

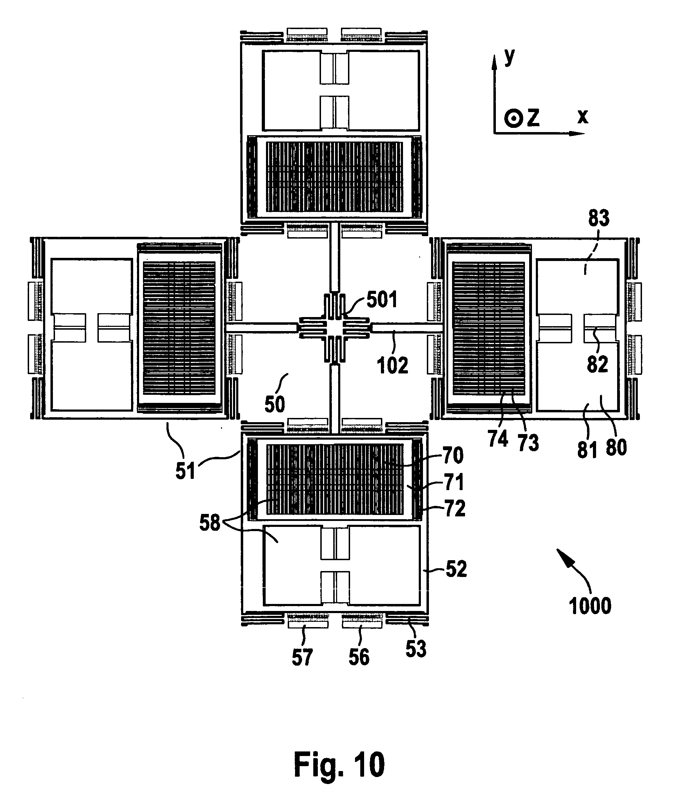

Figur 10 zeigt eine schematische Darstellung eines dreiachsigen Drehratensensors 1000 zur Detektion von Drehraten um die x-, y- und z-Achse. Wie die in Figuren 5 und 6 dargestellten Drehratensensoren 500, 600 besteht der dreiachsige Drehratensensor 1000 aus vier beweglichen Teilstrukturen 51, die über Verbindungsstücke 102 an eine zentrale Verbindungsfeder 501 gekoppelt sind. Im Unterschied zu den Drehratensensoren 500, 600 weist jede bewegliche Teilstruktur 51 des Drehratensensors 1000 zwei Coriolis-Elemente 58 auf. Jede bewegliche Teilstruktur 51 umfasst ein Wippenstruktur-Coriolis-Element 80, sowie ein Gitterstruktur-Coriolis-Element 70.

Bei Auftreten einer Drehrate um die y-Achse wirkt auf die in x-Richtung beweglichen Teilstrukturen 51 eine Coriolis-Kraft in Richtung der z-Achse und bewirkt eine Drehung der Wippenelemente 81 der Wippenstruktur-Coriolis-Elemente 80 der in x-Richtung beweglichen Teilstrukturen 51 um die parallel zur x-Achse ausgerichteten Torsionsfedern 82. Die anti-parallele Bewegung der beiden in x-Richtung beweglichen Teilstrukturen 51 gestattet eine differenzielle Auswertung der durch die Coriolis-Kraft bewirkten Verkippung der Wippenelemente 81 und somit eine Detektion einer Drehrate um die y-Achse.

Bei Auftreten einer Drehrate um die x-Achse wirkt auf die in y-Richtung beweglichen Teilstrukturen 51 eine Coriolis-Kraft in z-Richtung und bewirkt eine Drehung der Wippenelemente 81 der Wippenstruktur-Coriolis-Elemente 80 der in y-Richtung beweglichen Teilstrukturen 51 um die parallel zur y-Achse ausgerichteten Torsionsfedern 82. Wegen der anti-parallelen Bewegung der beiden in y-Richtung beweglichen Teilstrukturen 51 ist eine differenzielle Auswertung der Drehung der Wippenelemente 81 möglich.

Bei Auftreten einer Drehrate um die z-Achse wirkt auf die in x-Richtung beweglichen Teilstrukturen 51 eine Coriolis-Kraft in y-Richtung und bewirkt eine Auslenkung der Rahmen 71 der Gitterstruktur-Coriolis-Elemente 70 der in x-Richtung beweglichen Teilstrukturen 51 in Richtung der y-Achse. Wegen der anti-parallelen Bewegung der beiden in x-Richtung beweglichen Teilstrukturen 51 ist eine differenzielle Auswertung der durch die Coriolis-Kraft bewirkten Auslenkung der Rahmen 71 möglich.

Weiter wirkt bei Auftreten einer Drehrate um die z-Achse eine Coriolis-Kraft in Richtung der x-Achse auf die in y-Richtung beweglichen Teilstrukturen 51 und bewirkt eine Auslenkung der Rahmen 71 der Gitterstruktur-Coriolis-Elemente 70 der in y-Richtung beweglichen Teilstrukturen 51 in Richtung der x-Achse. Wegen der anti-parallelen Bewegung der beiden in y-Richtung beweglichen Teilstrukturen 51 kann auch diese Auslenkung differenziell erfasst werden. Zur Bestimmung einer Drehrate um die z-Achse stehen damit insgesamt vier Coriolis-Elemente 58 zur Verfügung.

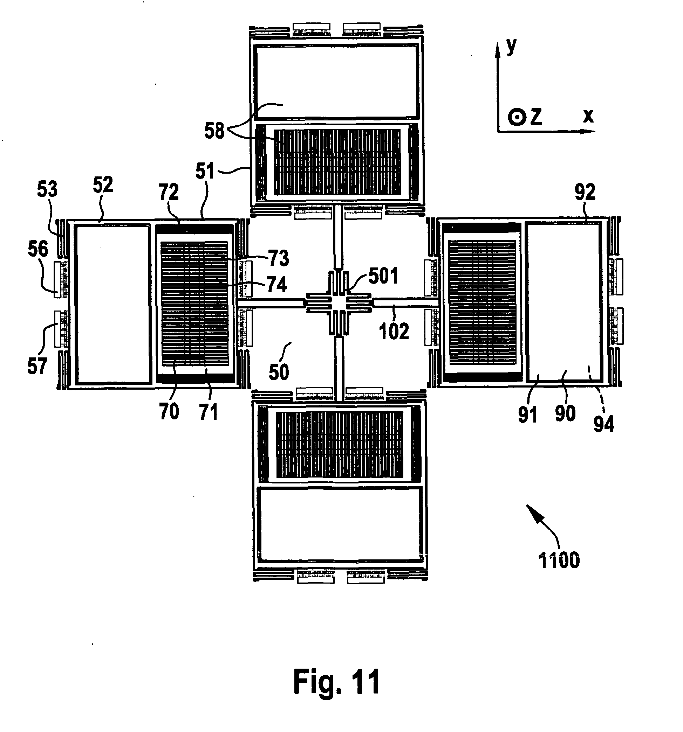

Figur 11 zeigt eine schematische Darstellung eines weiteren dreiachsigen Drehratensensors 1100 zur Bestimmung von Drehraten um alle drei Raumachsen. Im Vergleich zum in Figur 10 dargestellten Drehratensensors 1000 wurden die vier Wippenstruktur-Coriolis-Elemente 80 zur Bestimmung von Drehraten um die x- und y-Achse durch Trampolinstruktur-Coriolis-Elemente 90 ersetzt. Diese sind ebenfalls zur differenziellen Detektion von Drehraten um die x- und y-Achse geeignet.

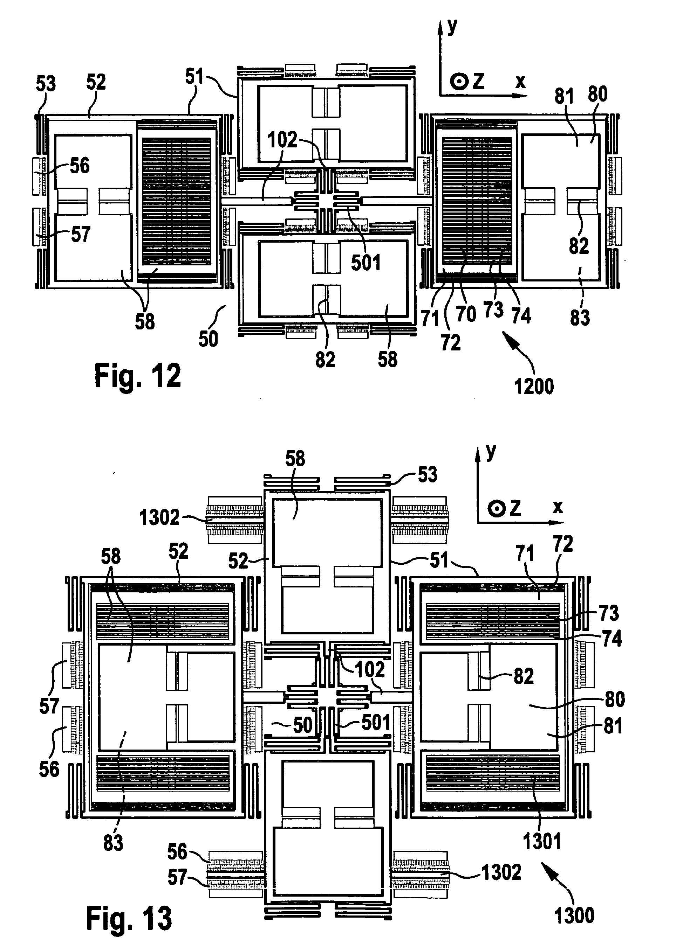

Die dreiachsigen Drehratensensoren 1000, 1100 aus Figuren 10, 11 weisen unnötig viele Coriolis-Elemente 58 zur Bestimmung von Drehraten um die z-Achse auf. Figur 12 zeigt eine schematische Darstellung eines dreiachsigen Drehratensensors 1200, dessen Aufbau dem des Drehratensensors 1000 in Figur 10 ähnelt. Allerdings fehlen in den in y-Richtung beweglichen Teilstrukturen 51 die Gitterstruktur-Coriolis-Elemente 70. Die in y-Richtung beweglichen Teilstrukturen 51 umfassen somit nur jeweils ein Wippenstruktur-Coriolis-Element 80. Zur Detektion von Drehraten um die z-Achse dienen lediglich die Gitterstruktur-Coriolis-Elemente 70 der in x-Richtung beweglichen Teilstrukturen 51. Weiter sind die Verbindungsstücke 102 zwischen den Antriebsrahmen 52 der in y-Richtung beweglichen Teilstrukturen 51 und der zentralen Verbindungsfeder 501 stark gegenüber den Verbindungsstücken 102 zwischen den Antriebsrahmen 52 der in x-Richtung beweglichen Teilstrukturen 51 und der zentralen Verbindungsfeder 501 verkürzt, sodass die in y-Richtung beweglichen Teilstrukturen 51 im zwischen den in x-Richtung beweglichen Teilstrukturen gelegenen Bereich der Oberfläche des Substrats 50 angeordnet sind. Dadurch reduziert sich der Platzbedarf des Drehratensensors 1200.

Die in y-Richtung beweglichen Teilstrukturen 51 des Drehratensensors 1200 weisen lediglich je ein Coriolis-Element 58 auf, während die in x-Richtung beweglichen Teilstrukturen 51 des Drehratensensors 1200 je zwei Coriolis-Elemente 58 umfassen. Dadurch ist die Masse der in y-Richtung beweglichen Teilstrukturen 51 geringer als die Masse der in x-Richtung beweglichen Teilstrukturen 51. In einer bevorzugten Ausführungsform wird dieser Massenunterschied durch unterschiedliche Federsteifigkeiten der zentralen Verbindungsfeder 501 in x- und y-Richtung kompensiert. In dieser Ausführungsform weist die zentrale Verbindungsfeder 501 in y-Richtung eine geringere Federsteifigkeit als in x-Richtung auf. Die Federsteifigkeiten sind so gewählt, dass die in y-Richtung beweglichen Teilstrukturen 51 eine Schwingung mit vergleichbarer Auslenkungsamplitude wie die in x-Richtung beweglichen Teilstrukturen 51 ausführen. Die Steifigkeit der zentralen Verbindungsfeder 501 kann durch unterschiedliche Längen und Dicken der einzelnen Federglieder eingestellt werden.

Figur 13 zeigt eine schematische Darstellung eines weiteren dreiachsigen Drehratensensors 1300 zur Detektion von Drehraten um alle drei Raumrichtungen. Der Drehratensensor 1300 umfasst vier bewegliche Teilstrukturen 51. Die in x-Richtung beweglichen Teilstrukturen 51 weisen je zwei Coriolis-Elemente 58 zur Detektion von Drehraten um die y-und z-Achse auf. Die beiden in y-Richtung beweglichen Teilstrukturen 51 weisen je ein Coriolis-Element 58 zur differenziellen Detektion von Drehraten um die x-Achse auf.

Die in x-Richtung beweglichen Teilstrukturen 51 weisen je ein zweigeteiltes Gitterstruktur-Coriolis-Element 1301 und ein Wippenstruktur-Coriolis-Element 80 auf. Die zweigeteilten Gitterstruktur-Coriolis-Elemente 1301 haben eine U-Form und umschließen die Wippenstruktur-Coriolis-Elemente 80, ohne diese zu berühren. Durch diese Form des zweigeteilten Gitterstruktur-Coriolis-Elements 1301 weisen die in x-Richtung beweglichen Teilstrukturen 51 eine Symmetrie bezüglich einer zur x-Achse parallelen Spiegelebene auf. Die Wippenstruktur-Coriolis-Elemente 80 der beiden in x-Richtung beweglichen Teilstrukturen 51 dienen zur differenziellen Detektion von Drehraten um die y-Achse. Die beiden zweigeteilten Gitterstruktur-Coriolis-Elemente 1301 der beiden in x-Richtung beweglichen Teilstrukturen 51 dienen zur differenziellen Detektion von Drehraten um die z-Achse.

Die beiden in y-Richtung beweglichen Teilstrukturen 51 weisen je ein Wippenstruktur-Coriolis-Element 80 auf. Die Wippenstruktur-Coriolis-Elemente 80 der in y-Richtung beweglichen Teilstrukturen 51 sind gegenüber den Wippenstruktur-Coriolis-Elementen 80 der in y-Richtung beweglichen Teilstrukturen 51 des in Figur 12 dargestellten Drehratensensors 1200 um 90° gedreht. Dadurch weisen die in y-Richtung beweglichen Teilstrukturen 51 sowohl eine innere Symmetrie bezüglich einer zur y-Achse parallelen Spiegelebene als auch eine Symmetrie zueinander auf. Die Funktionsweise der Trampolinstruktur-Coriolis-Elemente 90 ändert sich durch die um 90° gedrehte Anordnung nicht.

Die Antriebsrahmen 52 der in y-Richtung beweglichen Teilstrukturen 51 weisen an den zur y-Achse parallelen Seitenkanten je einen Ausleger 1302 auf. Die Antriebs-Kammstrukturen 56 zum Antrieb der in y-Richtung beweglichen Teilstrukturen 51, sowie die kapazitiven Antriebsdetektions-Kammstrukturen 57 zur Detektion der Antriebsbewegung der in y-Richtung beweglichen Teilstrukturen 51 sind an den Auslegern 1302 der Antriebsrahmen 52 der in y-Richtung beweglichen Teilstrukturen 51 angebracht. Die gesamten zur x-Achse parallelen Seitenkanten der Antriebsrahmen 52 der im y-Richtung beweglichen Teilstrukturen 51 werden durch vier Verbindungs-Biegefedern 53 eingenommen. Diese Anordnung der Antriebs-Kammstrukturen 56, der kapazitiven Antriebsdetektions-Kammstrukturen 57, sowie der Verbindungs-Biegefedern 53 ermöglicht geringere räumliche Abmessungen der in y-Richtung beweglichen Teilstrukturen 51 und reduziert damit den Flächenbedarf des dreiachsigen Drehratensensors 1300.

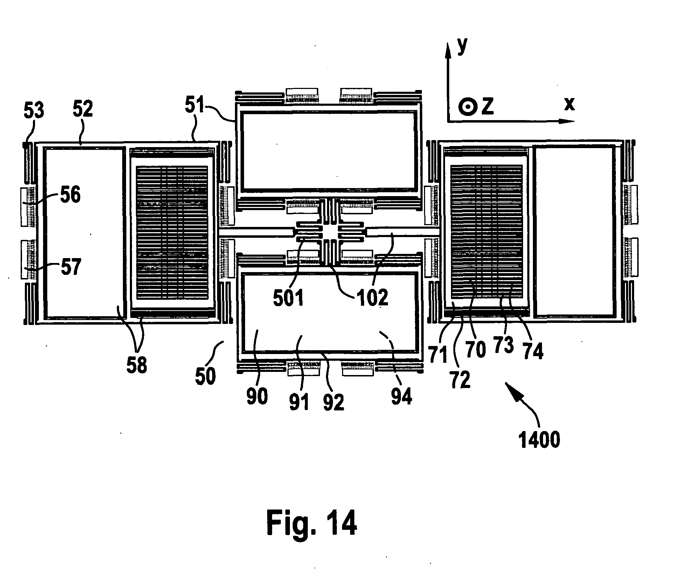

Figur 14 zeigt einen weiteren dreiachsigen Drehratensensors 1400 zur Detektion von Drehraten um alle drei Raumrichtungen. Der Drehratensensor 1400 entspricht dem in Figur 12 gezeigten Drehratensensor 1200, wobei in allen vier beweglichen Teilstrukturen 51 das Wippenstruktur-Coriolis-Element 80 durch ein Trampolinstruktur-Coriolis-Element 90 ersetzt worden ist. Die Trampolinstruktur-Coriolis-Elemente 90 der in y-Richtung beweglichen Teilstrukturen 51 gestatten eine differenzielle Detektion von Drehraten um die x-Achse. Die Trampolinstruktur-Coriolis-Elemente 90 der in x-Richtung beweglichen Teilstrukturen 51 gestatten ein differenzielle Detektion einer Drehrate um die y-Achse. Der Drehratensensor 1400 weist eine höhere Symmetrie als der Drehratensensor 1200 auf.

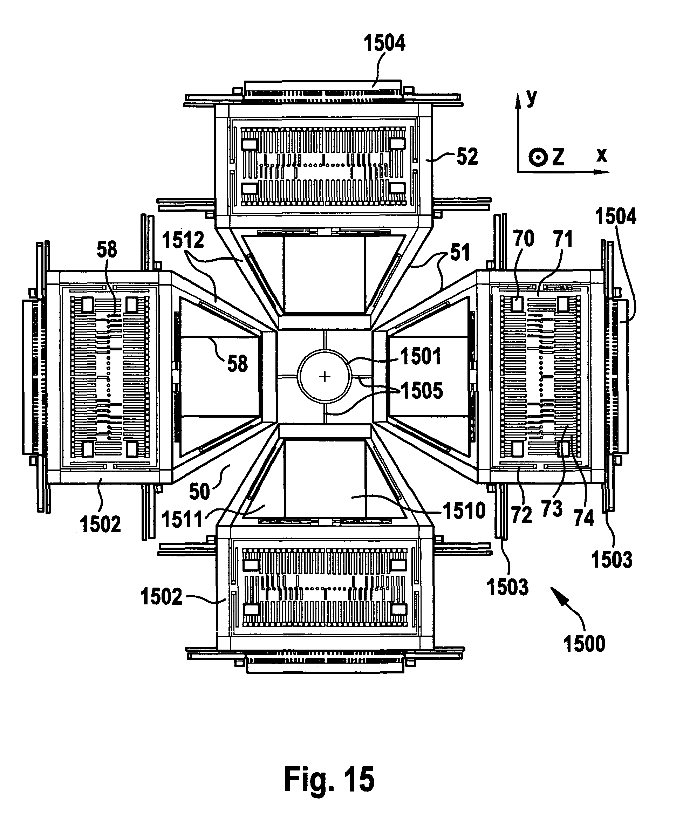

Figur 15 zeigt eine weitere Ausführungsform eines dreiachsigen Drehratensensors 1500 zur Detektion von Drehraten um die x-, y- und z-Achse. Der Drehratensensor 1500 umfasst vier bewegliche Teilstrukturen 51. Zwischen den beweglichen Teilstrukturen 51 befindet sich eine zentrale Verbindungsfeder 1501, die als kreisförmiger dünner Ring aus Substratmaterial ausgebildet ist. Die zentrale Verbindungsfeder 1501 ist über vier senkrecht im Abstand von jeweils 90° angebrachte Verbindungsstücke 1505 mit den Antriebsrahmen 1502 der vier beweglichen Teilstrukturen 51 verbunden. Die zentrale Verbindungsfeder 1501 kann auch elliptische Form aufweisen, um in x- und y-Richtung unterschiedliche Federsteifigkeiten zu erreichen.

Jede bewegliche Teilstruktur 51 ist über vier Verbindungs-Biegefedern 1503 mit dem Substrat 50 verbunden. Die Verbindungs-Biegefedern 1503 jeder beweglichen Teilstruktur 51 sind so orientiert, dass die bewegliche Teilstruktur 51 in Richtung einer ersten zur Oberfläche des Substrats parallele Achse beweglich in Richtung zweier dazu senkrecht stehender Achse fixiert ist. Eine erste und eine zweite bewegliche Teilstruktur 51 können zu einer anti-parallelen Schwingung in Richtung der x-Achse angeregt werden. Eine dritte und eine vierte bewegliche Teilstruktur 51 können zu einer anti-parallelen Schwingung in Richtung der y-Achse angeregt werden. Zur Anregung einer Schwingung weist jede der beweglichen Teilstrukturen 51 eine Antriebs-Kammstruktur 1504 an der der zentralen Verbindungsfeder 1501 abgewandten Seite des Antriebsrahmens 1502 auf, die die gesamte Seite des Antriebsrahmens 1502 einnimmt. In einer weiteren Ausführungsform nimmt die Antriebs-Kammstruktur 1504 nur einen Teil der Seite des Antriebsrahmens 1502 ein und wird durch eine Antriebsdetektions-Kammstruktur 57 ergänzt.

Die vier über die zentrale Verbindungsfeder 1501 miteinander verbundenen beweglichen Teilstrukturen 51 des Drehratensensors 1500 können zu einer gekoppelten Schwingung in x- und y-Richtung angeregt werden, die eine überlagerte Auslenkung der vier beweglichen Teilstrukturen 51 in x- und y-Richtung bewirkt. Beispielsweise können die in den Figuren 7 und 8 schematisch dargestellten Antriebsmoden 700, 701 angeregt werden.

Die Antriebsrahmen 1502 der vier beweglichen Teilstrukturen 51 weisen eine sechseckige Grundform auf. Jeder Antriebsrahmen 1502 besteht aus einem rechteckigen Teil, an dessen der zentralen Verbindungsfeder 1501 zugewandten Längsseite die Basis eines gleichschenkligen Trapezes angesetzt ist. Der rechteckige Teil des Antriebsrahmens 1502 jeder beweglichen Teilstruktur 51 weist ein Gitterstruktur-Coriolis-Element 70 zur Detektion eine Drehrate um die z-Achse auf. Der trapezförmige Teil des Antriebsrahmen 52 jeder beweglichen Teilstruktur 51 weist ein Trampolinstruktur-Coriolis-Element 1510 auf. Jedes Trampolinstruktur-Coriolis-Element 1510 umfasst eine trapezförmige seismische Masse 1511, die über jeweils vier Biegefedern 1512 mit dem Antriebsrahmen 1502 verbunden ist. Die Biegefedern 1512 sind so vorgesehen, dass die seismische Masse 1511 in x- und y-Richtung einer Bewegung des Antriebsrahmens 1502 folgt, während die seismische Masse 1511 in z-Richtung gegen den Antriebsrahmen 1502 ausgelenkt werden kann. Bei Vorliegen einer Drehrate um die y-Achse wirkt auf die in x-Richtung beweglichen Teilstrukturen 51 eine Coriolis-Kraft in Richtung der z-Achse und bewirkt eine Auslenkung der seismischen Massen 1511 der Trampolinstruktur-Coriolis-Elemente 1510 der in x-Richtung beweglichen Teilstrukturen 51 entlang der z-Achse. Wegen der anti-parallelen Bewegung der in x-Richtung beweglichen Teilstrukturen 51 werden die seismischen Massen 1511 der beiden in x-Richtung beweglichen Teilstrukturen 51 in entgegengesetzte Richtung ausgelenkt und gestatten eine differenzielle Detektion einer Drehrate um die y-Achse. Die beiden Trampolinstruktur-Coriolis-Elemente 1510 der in y-Richtung beweglichen Teilstrukturen 51 erlauben eine differenzielle Bestimmung einer Drehrate um die x-Achse.

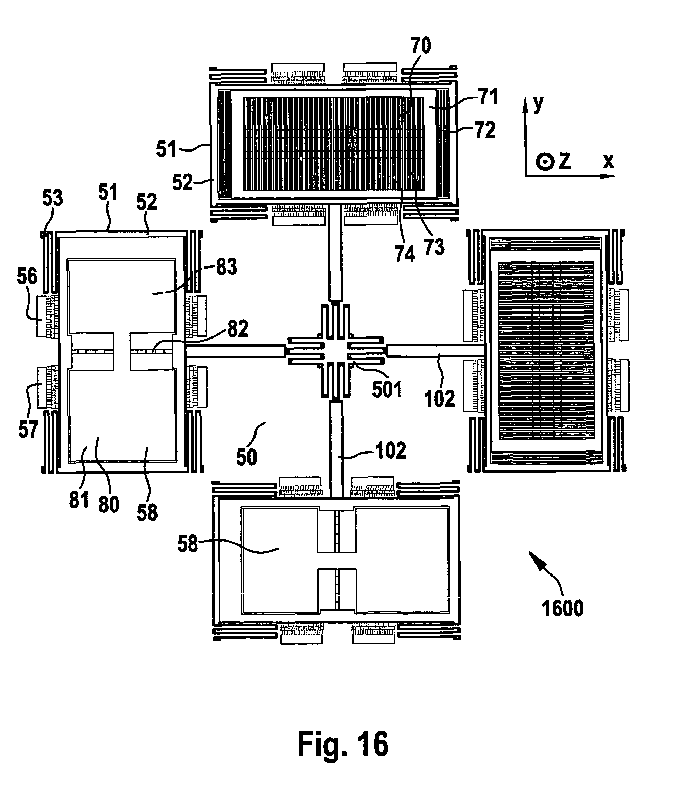

Figur 16 zeigt einen weiteren dreiachsigen Drehratensensor 1600 zur Bestimmung von Drehraten um die x-, y- und z-Achse. Der Drehratensensor 1600 umfasst 4 bewegliche Teilstrukturen 51, die jeweils ein Coriolis-Element 58 aufweisen. Dabei weist eine der in x-Richtung beweglichen Teilstrukturen 51 ein Wippenstruktur-Coriolis-Element 80, die andere in x-Richtung bewegliche Teilstruktur 51 ein Gitterstruktur-Coriolis-Element 70 auf. Eine der in y-Richtung beweglichen Teilstrukturen 51 weist ein Gitterstruktur-Coriolis-Element 70, die andere in y-Richtung bewegliche Teilstruktur 51 ein Wippenstruktur-Coriolis-Element 80 auf.

Werden die vier beweglichen Teilstrukturen 51 des dreiachsigen Drehratensensors 1600 in eine gemeinsame Antriebsmode angeregt, so gestatten die beiden Gitterstruktur-Coriolis-Elemente 70 eine differentielle Detektion einer Drehrate um die z-Achse. Das VVippenstruktur-Coriolis-Element 80 der ersten in x-Richtung beweglichen Teilstruktur 51 gestattet eine Detektion einer Drehrate um die y-Achse. Das Wippenstruktur-Coriolis-Element 80 der zweiten in y-Richtung beweglichen Teilstruktur 51 gestattet eine Detektion einer Drehrate um die x-Achse.

Da jede der vier beweglichen Teilstrukturen 51 des dreiachsigen Drehratensensors 1600 nur ein Coriolis-Element 58 aufweist, ist der Flächenbedarf des Drehratensensors 1600 geringer als der des in Figur 10 dargestellten Drehratensensors 1000. Allerdings weisen anti-parallel schwingende Teilstrukturen 51 keine Symmetrie zueinander auf. Die unterschiedlichen Massen der Coriolis-Elemente 58 zweier anti-parallel schwingender Teilstrukturen 51 können durch eine geeignete Wahl der Massen der Antriebsrahmen 52 der beiden anti-parallel schwingenden Teilstrukturen 51 ausgeglichen werden.

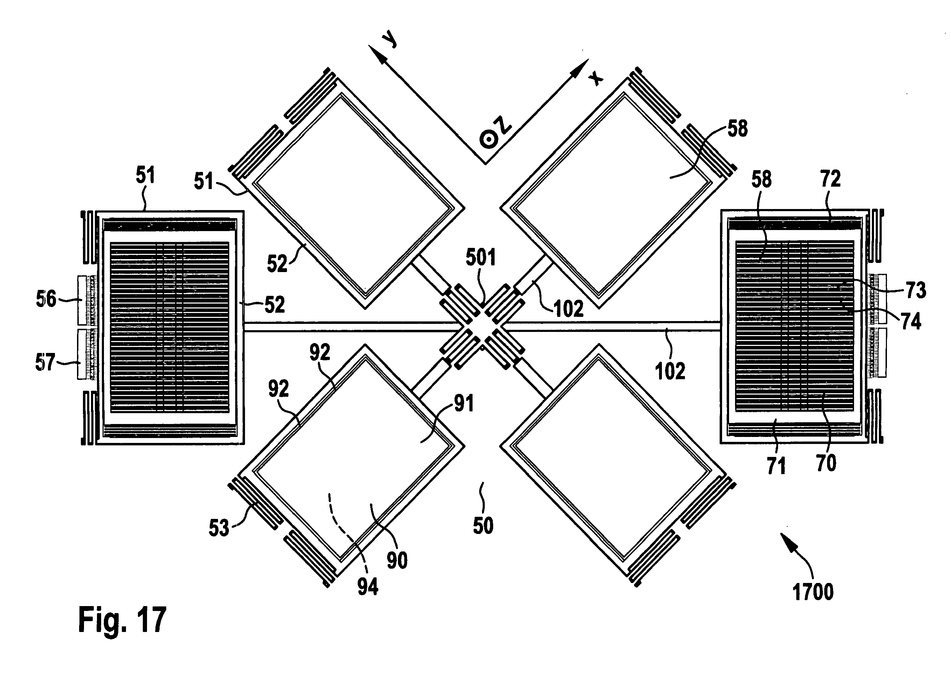

Figur 17 zeigt eine schematische Darstellung eines dreiachsigen Drehratensensors 1700, der aus sechs beweglichen Teilstrukturen 51 besteht. Vier bewegliche Teilstrukturen 51 des Drehratensensors 1700 bilden einen zweiachsigen Drehratensensor, dessen Aufbau dem des in Figur 6 dargestellten Drehratensensors 600 entspricht. Der Übersichtlichkeit halber wurden nur einige der Verbindungs-Biegefedern 53 dargestellt und auf eine Darstellung der Antriebs-Kammstrukturen 56 sowie der kapazitiven Antriebsdetektions-Kammstrukturen 57 verzichtet. Zwei weitere bewegliche Teilstrukturen 51 sind um 45° gegenüber den ersten vier beweglichen Teilstrukturen 51 gedreht auf zwei Seiten der zentralen Verbindungsfeder 501 angeordnet und ebenfalls über Verbindungsstücke 102 mit der zentralen Verbindungsfeder 501 verbunden. Dies sechs beweglichen Teilstrukturen 51 können zu einer gemeinsamen Schwingungsmode angeregt werden.

Die ersten vier beweglichen Teilstrukturen 51 weisen je ein Trampolinstruktur-Coriolis-Element 90 auf. Die in x-Richtung beweglichen Teilstrukturen 51 erlauben eine differentielle Detektion einer Drehrate um die y-Achse. Die in y-Richtung beweglichen Teilstrukturen 51 erlauben eine differentielle Detektion einer Drehrate um die x-Achse. Die zwei weiteren diagonal in der x-y-Ebene beweglichen Teilstrukturen 51 weisen je ein Gitterstruktur-Coriolis-Element 70 auf und gestatten eine differentielle Detektion einer Drehrate um die z-Achse.

## Patentansprüche

1. Drehratensensor
- mit einem Substrat (50) und einer Mehrzahl von beweglichen Teilstrukturen (51), die über einer Oberfläche des Substrats (50) angeordnet sind,
- wobei die beweglichen Teilstrukturen (51) an ein gemeinsames, insbesondere ein zentrales, Federelement (101,501,1501) gekoppelt sind,
- wobei Anregungs-Mittel (56,1504) vorgesehen sind, um die beweglichen Teilstrukturen (51) zu einer gekoppelten Schwingung in einer zur Oberfläche des Substrats (50) parallelen Ebene anzuregen,
- wobei die beweglichen Teilstrukturen (51) Antriebsrahmen (52) und Coriolis-Elemente (58) aufweisen,
- wobei jedes Coriolis-Element (58) über weitere Federelemente (72,82,92,93,1512, 904) mit einem Antriebsrahmen (52) einer der Teilstrukturen (51) verbunden ist,
- wobei Nachweis-Mittel (73,74,83,94) vorgesehen sind, durch eine Coriolis-Kraft verursachte Auslenkungen der Coriolis-Elemente (58) nachzuweisen, **dadurch gekennzeichnet, dass** mindestens eine bewegliche Teilstruktur (51) wenigstens ein erstes Coriolis-Element (58) und ein zweites Coriolis-Element (58) aufweist.
- wobei das erste Coriolis-Element (58) zum Nachweis einer Drehrate H um eine erste Achse vorgesehen ist,
- wobei das zweite Coriolis-Element (58) zum Nachweis einer Drehrate um eine zweite Achse vorgesehen ist, und
- wobei die zweite Achse nicht parallel, insbesondere senkrecht zur ersten Achse ausgerichtet ist,

2. Drehratensensor (900) nach Anspruch 1,
- wobei der Antriebsrahmen (52) jeder Teilstruktur (51) mit dem zentralen Federelement (101,501,1501) verbunden ist.

3. Drehratensensor nach einem der vorhergehenden Ansprüche,
wobei ein gemeinsamer Massenschwerpunkt mindestens zweier beweglicher Teilstrukturen (51) während einer Schwingungsperiode ortsfest bleibt.

4. Drehratensensor nach einem der vorhergehenden Ansprüche,
- wobei mindestens ein Coriolis-Element (70,1301) über Biegefederelemente (72) mit einem Antriebsrahmen (52) einer Teilstruktur (51) verbunden ist,
- wobei die Biegefederelemente (72) in Richtung der Schwingung der Teilstruktur (51) hohe Steifigkeit aufweisen,
- wobei die Biegefederelemente (72) in eine zweite Richtung, die senkrecht zur Richtung der Schwingung der Teilstruktur (51) und parallel zur Oberfläche des Substrats (50) ausgerichtet ist, geringe Steifigkeit aufweisen,
- wobei die Nachweis-Mittel (73,74) vorgesehen sind, um eine durch eine Coriolis-Kraft verursachte Auslenkung des Coriolis-Elements (70,1301) in die zweite Richtung nachzuweisen.

5. Drehratensensor nach einem der vorhergehenden Ansprüche,
- wobei mindestens ein Coriolis-Element (80) als Wippe ausgebildet ist,
- wobei das Coriolis-Element (80) über Torsionsfederelemente (82) mit einem Antriebsrahmen (52) einer Teilstruktur (51) verbunden ist,
- wobei die Torsionsfederelemente (82) eine zur Oberfläche des Substrats (50) parallele Drehachse der Wippe bilden,
- wobei beide Seiten der Wippe unterschiedliche Masse aufweisen,
- wobei das Coriolis-Element (80) durch eine senkrecht zur Oberfläche des Substrats (50) wirkende Coriolis-Kraft um die Drehachse drehbar ist,
- wobei die Nachweis-Mittel (83) vorgesehen sind, um eine Drehung des Coriolis-Elements (80) nachzuweisen.

6. Drehratensensor nach einem der vorhergehenden Ansprüche,
- wobei mindestens ein Coriolis-Element (90,1510) über Biegefederelemente (92,1512) mit einem Antriebsrahmen (52) einer - Teilstruktur (51) verbunden ist,
- wobei die Biegefederelemente (92,1512) in zur Oberfläche des Substrats (50) parallelen Richtungen hohe Steifigkeit aufweisen,
- wobei die Biegefederelemente (92,1512) in eine zweite Richtung, die senkrecht zur Oberfläche des Substrats (50) ausgerichtet ist, geringe Steifigkeit aufweisen,
- wobei die Nachweis-Mittel (94) vorgesehen sind, um eine durch eine Coriolis-Kraft verursachte Auslenkung des Coriolis-Elements (90,1510) in die zweite Richtung nachzuweisen.

7. Drehratensensor nach einem der vorhergehenden Ansprüche, wobei die Anregungs-Mittel (56,1504) vorgesehen sind, um zwei bewegliche Teilstrukturen (51) zu einer Schwingungsmode anzuregen, die im Wesentlichen eine gegenphasige Auslenkung der beiden beweglichen Teilstrukturen (51) entlang einer gemeinsamen Achse bewirkt.

8. Drehratensensor nach Anspruch 7,
- wobei die zwei zu einer gemeinsamen Schwingungsmode mit gegenphasiger Auslenkung anregbaren beweglichen Teilstrukturen (51) je ein Coriolis-Element (58) aufweisen,
- wobei die zwei Coriolis-Elemente (58) durch eine Coriolis-Kraft in entgegengesetzte Richtungen auslenkbar sind.

9. Drehratensensor nach einem der Ansprüche 1 bis 6,
- wobei vier bewegliche Teilstrukturen (51) vorgesehen sind,
- wobei die Anregungs-Mittel (56,1504) vorgesehen sind, um die vier beweglichen Teilstrukturen (51) zu einer gekoppelten Schwingungsmode (700,701) anzuregen,
- die eine im Wesentlichen gegenphasige Auslenkung einer ersten und einer zweiten beweglichen Teilstruktur (51) entlang einer ersten Achse bewirkt,
- und die eine im Wesentlichen gegenphasige Auslenkung einer dritten und einer vierten beweglichen Teilstruktur (51) entlang einer zweiten Achse bewirkt.

10. Drehratensensor nach Anspruch 9,
wobei die Anregungs-Mittel (56,1504) vorgesehen sind, um eine Schwingungsmode (700) anzuregen, bei der die Auslenkung der ersten und zweiten beweglichen Teilstruktur (51) gleichphasig zur Auslenkung der dritten und vierten beweglichen Teilstruktur (51) verläuft.

11. Drehratensensor nach Anspruch 9,
wobei die Anregungs-Mittel (56,1504) vorgesehen sind, um eine Schwingungsmode (701) anzuregen, bei der die Auslenkung der ersten und zweiten beweglichen Teilstruktur (51) gegenphasig zur Auslenkung der dritten und vierten beweglichen Teilstruktur (51) verläuft.

12. Drehratensensor nach einem der Ansprüche 9 bis 11,
wobei die Coriolis-Elemente (58) zur Bestimmung von Drehraten um drei aufeinander senkrecht stehende Achsen vorgesehen sind.

13. Drehratensensor nach einem der Ansprüche 9 bis 12,
- wobei die erste und die zweite bewegliche Teilstruktur (51) eine im Wesentlichen identische erste Masse aufweisen,
- wobei die dritte und die vierte bewegliche Teilstruktur (51) eine im Wesentlichen identische zweite Masse aufweisen,
- wobei das zentrale Federelement (501, 1501) in Richtung der ersten Achse eine erste Federsteifigkeit aufweist,
- wobei das zentrale Federelement (501, 1501) in Richtung der zweiten Achse eine zweite Federsteifigkeit aufweist,
- wobei die erste Masse, die zweite Masse, die erste Federsteifigkeit und die zweite Federsteifigkeit so gewählt sind, dass die vier beweglichen Teilstrukturen (51) zu einer Schwingungsmode mit im Wesentlichen gleicher Auslenkungsamplitude aller vierer beweglicher Teilstrukturen (51) anregbar sind.

14. Drehratensensor nach einem der Ansprüche 9 bis 13,
wobei die dritte und die vierte bewegliche Teilstruktur (51) so auf der Oberfläche des Substrats (50) angeordnet sind, dass ein Teil der Fläche der dritten und der vierten beweglichen Teilstruktur (51) einen Bereich der Oberfläche des Substrats (50) abdeckt, der zwischen der ersten und der zweiten beweglichen Teilstruktur (51) liegt.

15. Drehratensensor nach einem der vorhergehenden Ansprüche,
- wobei das zentrale Federelement (501) aus einer Mehrzahl von Zinken und Verbindungselementen besteht,
- wobei jeder Zinken einen ersten Knick um 90° gegen den Uhrzeigersinn, einen ersten geraden Abschnitt erster Länge, einen zweiten Knick um 90° im Uhrzeigersinn, einen zweiten geraden Abschnitt von zweiter Länge, einen dritten Knick um 90° im Uhrzeigersinn und einen drittem Abschnitt erster Länge umfasst,
- wobei jedes Verbindungselement einen vierten Knick von 90° gegen den Uhrzeigersinn und einen vierten Abschnitt von dritter Länge umfasst,
- wobei sich an jeden Zinken entweder ein Verbindungselement oder ein weiterer Zinken anschließt,
- wobei sich an jedes Verbindungselement ein Zinken anschließt,
- wobei das Federelement (501) einen geschlossenen Ring bildet.

16. Drehratensensor nach einem der Ansprüche 1 bis 14,
wobei das zentrale Federelement (1501) als Ring ausgebildet ist, wobei die beweglichen Teilstrukturen (51) über an den Ring angesetzte Verbindungsstücke (1505) an das zentrale Federelement (1501) gekoppelt sind.

## Claims

1. Yaw rate sensor
- having a substrate (50) and a plurality of movable sub-structures (51), which are arranged above a surface of the substrate (50),
- the movable sub-structures (51) being coupled to a common, in particular a central, spring element (101, 501, 1501),
- excitation means (56, 1504) being provided in order to excite the movable sub-structures (51) into a coupled oscillation in a plane parallel to the surface of the substrate (50),
- the movable sub-structures (51) having drive frames (52) and Coriolis elements (58),
- each Coriolis element (58) being connected to a drive frame (52) of one of the sub-structures (51) via further spring elements (72, 82, 92, 93, 1512, 904),
- detection means (73, 74, 83, 94) being provided in order to detect deflections of the Coriolis elements (58) caused by a Coriolis force, **characterized in that**
at least one movable sub-structure (51) has at least one first Coriolis element (58) and a second Coriolis element (58),
- the first Coriolis element (58) being provided to detect a rate of rotation about a first axis,
- the second Coriolis element (58) being provided to detect a rate of rotation about a second axis, and
- the second axis being aligned non-parallel to, in particular at right angles to, the first axis.

2. Yaw rate sensor (900) according to Claim 1,
- the drive frame (52) of each sub-structure (51) being connected to the central spring element (101, 501, 1501).

3. Yaw rate sensor according to one of the preceding claims, a common mass centre of gravity of at least two movable sub-structures (51) remaining stationary during an oscillation period.

4. Yaw rate sensor according to one of the preceding claims,
- at least one Coriolis element (70, 1301) being connected to a drive frame (52) of a sub-structure (51) via flexural spring elements (72),
- the flexural spring elements (72) exhibiting high stiffness in the direction of oscillation of the sub-structure (51),
- the flexural spring elements (72) exhibiting low stiffness in a second direction, which is aligned at right angles to the direction of oscillation of the sub-structure (51) and parallel to the surface of the substrate (50),
- the detection means (73, 74) being provided in order to detect a deflection of the Coriolis element (70, 1301) in the second direction caused by a Coriolis force.

5. Yaw rate sensor according to one of the preceding claims,
- at least one Coriolis element (80) being formed as a rocker,
- the Coriolis element (80) being connected to a drive frame (52) of a sub-structure (51) via torsional spring elements (82),
- the torsional spring elements (82) forming an axis of rotation of the rocker that is parallel to the surface of the substrate (50),
- the two sides of the rocker having different masses,
- it being possible for the Coriolis element (80) to be rotated about the axis of rotation by a Coriolis force acting at right angles to the surface of the substrate (50),
- the detection means (83) being provided in order to detect a rotation of the Coriolis element (80).

6. Yaw rate sensor according to one of the preceding claims,
- at least one Coriolis element (90, 1510) being connected to a drive frame (52) of a sub-structure (51) via flexural spring elements (92, 1512),
- the flexural spring elements (92, 1512) exhibiting high stiffness in directions parallel to the surface of the substrate (50),
- the flexural spring elements (92, 1512) exhibiting low stiffness in a second direction, which is aligned at right angles to the surface of the substrate (50),
- the detection means (94) being provided in order to detect a deflection of the Coriolis element (90, 1510) in the second direction caused by a Coriolis force.

7. Yaw rate sensor according to one of the preceding claims,
the excitation means (56, 1504) being provided in order to excite two movable sub-structures (51) into a mode of oscillation which substantially effects an anti-phase deflection of the two movable sub-structures (51) along a common axis.

8. Yaw rate sensor according to Claim 7,
- the two movable sub-structures (51) that can be excited into a common mode of oscillation with anti-phase deflection each having a Coriolis element (58),
- it being possible for the two Coriolis elements (58) to be deflected in opposite directions by a Coriolis force.

9. Yaw rate sensor according to one of Claims 1 to 6,
- four movable sub-structures (51) being provided,
- the excitation means (56, 1504) being provided to excite the four movable sub-structures (51) into a coupled mode of oscillation (700, 701),
- which effects a substantially anti-phase deflection of a first and a second movable sub-structure (51) along a first axis,
- and which effects a substantially anti-phase deflection of a third and a fourth movable sub-structure (51) along a second axis.

10. Yaw rate sensor according to Claim 9,
the excitation means (56, 1504) being provided in order to excite a mode of oscillation (700) in which the deflection of the first and second movable sub-structure (51) extends in the same phase as the deflection of the third and fourth movable sub-structure (51).

11. Yaw rate sensor according to Claim 9,
the excitation means (56, 1504) being provided in order to excite a mode of oscillation (701) in which the deflection of the first and second movable sub-structure (51) extends in anti-phase with respect to the deflection of the third and
fourth movable sub-structure (51).

12. Yaw rate sensor according to one of Claims 9 to 11,
the Coriolis elements (58) being provided in order to determine rates of rotation about three axes at right angles to one another.

13. Yaw rate sensor according to one of Claims 9 to 12,
- the first and the second movable sub-structure (51) having a substantially identical first mass,
- the third and the fourth movable sub-structure (51) having a substantially identical second mass,
- the central spring element (501, 1501) exhibiting a first spring stiffness in the direction of the first axis,
- the central spring element (501, 1501) exhibiting a second spring stiffness in the direction of the second axis,
- the first mass, the second mass, the first spring stiffness and the second spring stiffness being chosen such that the four movable sub-structures (51) can be excited into a mode of oscillation with a substantially identical deflection amplitude of all four movable sub-structures (51).

14. Yaw rate sensor according to one of Claims 9 to 13,
the third and the fourth movable sub-structure (51) being arranged on the surface of the substrate (50) such that part of the area of the third and the fourth movable sub-structure (51) covers a region of the surface of the substrate (50) which lies between the first and the second movable sub-structure (51).

15. Yaw rate sensor according to one of the preceding claims,
- the central spring element (501) comprising a plurality of prongs and connecting elements,
- each prong having a first bend through 90° in the anticlockwise direction, a first straight section of first length, a second bend through 90° in the clockwise direction, a second straight section of second length, a third bend through 90° in the clockwise direction and a third section of first length,
- each connecting element comprising a fourth bend of 90° in the anticlockwise direction and a fourth section of third length,
- each prong being adjoined either by a connecting element or by a further prong,
- each connecting element being adjoined by a prong,
- the spring element (501) forming a closed ring.

16. Yaw rate sensor according to one of Claims 1 to 14,
the central spring element (1501) being formed as a ring, the movable sub-structures (51) being coupled to the central spring element (1501) via connecting pieces (1505) attached to the ring.

## Revendications

1. Capteur de vitesse de rotation présentant un substrat (50) et plusieurs structures partielles (51) mobiles disposées au-dessus d'une surface du substrat (50),
les structures partielles (51) mobiles étant accouplées à un élément élastique (101, 501, 1501) commun, en particulier central,
des moyens d'excitation (56, 1504) étant prévus pour exciter les structures partielles (51) mobiles en oscillation couplée dans un plan parallèle à la surface du substrat (50),
les structures partielles (51) mobiles présentant des bâtis d'entraînement (52) et des éléments de Coriolis (58),
chaque élément de Coriolis (58) étant raccordé au cadre d'entraînement (52) de l'une des structures partielles (51) par d'autres éléments élastiques (72, 82, 92, 93, 1512, 904),
des moyens de détection (73, 74, 83, 94) permettant de détecter les déviations des éléments de Coriolis (58) provoquées par la force de Coriolis, **caractérisé en ce que**
au moins une structure partielle (51) mobile présente au moins un premier élément de Coriolis (58) et un deuxième élément de Coriolis (58),
**en ce que** le premier élément de Coriolis (58) est prévu pour détecter une vitesse de rotation autour d'un premier axe,
**en ce que** le deuxième élément de Coriolis (58) est prévu pour détecter la vitesse de rotation autour d'un deuxième axe et
**en ce que** le deuxième axe n'est pas parallèle mais perpendiculaire au premier axe.

2. Capteur (900) de vitesse de rotation selon la revendication 1, dans lequel le bâti d'entraînement (52) de chaque structure partielle (51) est relié à l'élément élastique central (101, 501, 1501).

3. Capteur de vitesse de rotation selon l'une des revendications précédentes, dans lequel un centre de masse commun d'au moins deux structures partielles (51) mobiles reste immobile pendant une période d'oscillation.

4. Capteur de vitesse de rotation selon l'une des revendications précédentes, dans lequel au moins un élément de Coriolis (70, 1301) est raccordé par des éléments (72) élastiques en flexion à un bâti d'entraînement (52) d'une structure partielle (51),
les éléments (72) élastiques en flexion présentant une haute rigidité dans la direction de l'oscillation de la structure partielle (51),
les éléments (72) élastiques en flexion présentant une faible rigidité dans une deuxième direction orientée perpendiculairement à la direction des oscillations de la structure partielle (51) et parallèlement à la surface du substrat (50),
les moyens de détection (73, 74) étant prévus pour détecter une déviation de l'élément de Coriolis (70, 1301) dans la deuxième direction sous l'action de la force de Coriolis.

5. Capteur de vitesse de rotation selon l'une des revendications précédentes, dans lequel au moins un élément de Coriolis (80) est configuré en bascule, l'élément de Coriolis (80) étant raccordée par des éléments (82) élastiques en torsion à un bâti d'entraînement (52) d'une structure partielle (51),
les éléments (82) élastiques en torsion formant un axe de bascule parallèle à la surface du substrat (50),
les deux côtés de la bascule présentant des masses différentes,
l'élément de Coriolis (80) pouvant tourner autour de l'axe de rotation sous l'action d'une force de Coriolis qui agit perpendiculairement à la surface du substrat (50) et
les moyens de détection (83) étant prévus pour détecter une rotation de l'élément de Coriolis (80).

6. Capteur de vitesse de rotation selon l'une des revendications précédentes, dans lequel au moins un élément de Coriolis (90, 1510) est relié par des éléments (92, 1512) élastiques en flexion à un bâti d'entraînement (52) d'une structure partielle (51),
les éléments (92, 1512) élastiques en flexion présentant une haute rigidité dans la direction parallèle à la surface du substrat (50),
les éléments (92, 1512) élastiques en flexion présentant une basse rigidité dans une deuxième direction orientée perpendiculairement à la surface du substrat (50) et
les moyens de détection (94) étant prévus pour détecter une déviation de l'élément de Coriolis (90, 1510) dans la deuxième direction sous l'action de la force de Coriolis.

7. Capteur de vitesse de rotation selon l'une des revendications précédentes, dans lequel les moyens d'excitation (56, 1504) sont prévus "pour exciter deux structures partielles (51) mobiles en un mode d'oscillation qui a pour effet essentiel une déviation en opposition de phase des deux structures partielles (51) mobiles le long d'un axe commun.

8. Capteur de vitesse de rotation selon la...
revendication 7, dans lequel les deux structures partielles (51) mobiles qui doivent être excitées en un mode d'oscillation commun à déviation en opposition de phase présentent chacune un élément de Coriolis (58), les deux éléments de Coriolis (58) pouvant être déviés dans des directions opposées sous l'action d'une force de Coriolis.

9. Capteur de vitesse de rotation selon l'une des revendications 1 à 6, dans lequel quatre structures partielles (51) mobiles sont prévues, les moyens d'excitation (56, 1504) étant prévus pour exciter les quatre structures partielles (51) mobiles en un mode d'oscillation (700, 701) couplé qui a pour effet des déviations essentiellement en opposition de phase d'une première et d'une deuxième structure (51) mobile le long d'un premier axe et qui a pour effet des déviations essentiellement en opposition de phase d'une troisième et d'une quatrième structure partielle (51) mobile le long d'un deuxième axe.

10. Capteur de vitesse de rotation selon la revendication 9, dans lequel les moyens d'excitation (56, 1504) sont prévus pour exciter un mode d'oscillation (700) dans lequel la déviation de la première et de la deuxième structure partielle (51) mobile est en accord de phase avec la déviation de la troisième et de la quatrième structure partielle (51) mobile.

11. Capteur de vitesse de rotation selon la revendication 9, dans lequel les moyens d'excitation (56, 1504) sont prévus pour exciter un mode d'oscillation (701) dans lequel la déviation de la première et de la deuxième structure partielle (51)
mobile est en opposition de phase par rapport à la déviation de la troisième et de la quatrième structure partielle (51) mobile.

12. Capteur de vitesse de rotation selon l'une des revendications 9 à 11, dans lequel les éléments de Coriolis (58) sont prévus pour déterminer des vitesses de rotation autour de trois axes mutuellement perpendiculaires.

13. Capteur de vitesse de rotation selon l'une des revendications 9 à 12, dans lequel la première et la deuxième structure partielle (51) mobile présentent essentiellement la même première masse, la troisième et la quatrième structure partielle (51) mobile présentant essentiellement la même deuxième masse,
l'élément élastique central (501, 1501) présentant une première rigidité élastique dans la direction du premier axe,
l'élément élastique central (501, 1501) présentant une deuxième rigidité élastique dans la direction du deuxième axe et
la première masse, la deuxième masse, la première rigidité élastique et la deuxième rigidité élastique sont sélectionnées de telle sorte que les quatre structures partielles (51) mobiles puissent être excitées en un mode d'oscillation dans lequel les quatre structures partielles (51) mobiles ont toutes essentiellement la même amplitude de déviation.

14. Capteur de vitesse de rotation selon l'une des revendications 9 à 13, dans lequel la troisième et la quatrième structure partielle (51) mobile sont disposées sur la surface du substrat (50) de telle sorte qu'une partie de la surface de la troisième et de la quatrième structure partielle (51) obile couvre une partie de la surface du substrat (50) située entre la première et la deuxième structure partielle (51)
mobile.

15. Capteur de vitesse de rotation selon l'une des revendications précédentes, dans lequel l'élément élastique central (501) est constitué de plusieurs dents et éléments de liaison,
chaque dent présentant un premier coude de 90° dans le sens opposé au sens des aiguilles d'une montre, une première partie rectiligne d'une première longueur, un deuxième coude de 90° dans le sens des aiguilles d'une montre, une deuxième partie rectiligne d'une deuxième longueur, un troisième coude de 90° dans le sens des aiguilles d'une montre et une troisième partie de la première longueur,
chaque élément de liaison présentant un quatrième coude de 90° dans le sens contraire des aiguilles d'une montre et une quatrième partie d'une troisième longueur,
un élément de liaison ou une autre dent se raccordant à chaque dent,
une dent se raccordant à chaque élément de liaison et
l'élément élastique (501) formant un anneau fermé.

16. Capteur de vitesse de rotation selon l'une des revendications 1 à 14, dans lequel l'élément élastique central (1501) est configuré en anneau, les structures partielles (51) mobiles étant accouplées à l'élément élastique central (1501) par l'intermédiaire de pièces de liaison (1505) placées sur l'anneau.
